# DEMANDE DE BREVET EUROPEEN

(11) **EP 4 246 286 A1**
(43) Date de publication de la demande: **20.09.2023**
(21) Numéro de dépôt: 23160010.7
(22) Date de dépôt: 03.03.2023
(51) Int. Cl.: G06F 1/3203, G06F 1/3234, G06F 1/3287, G06F 1/16, G06K 19/07

(54) **ALIMENTATION D'UN MODULE NFC**

(30) Priorité: 16.03.2022 FR 2202283
(71) Demandeur: STMICROELECTRONICS SA, 92120 Montrouge (FR); STMicroelectronics (Rousset) SAS, 13790 Rousset (FR); STMicroelectronics (ALPS) SAS, 38000 Grenoble (FR)
(72) Inventeur: TRAMONI, Alexandre, 83330 LE BEAUSSET (FR); SIBILLE, Florent, 38000 GRENOBLE (FR); ARNOULD, Patrick, 38340 VOREPPE (FR)
(74) Mandataire: Cabinet Beaumont

(57) **Abrégé**

La présente description concerne un dispositif électronique (300) comprenant :
- un module de communication en champ proche (301) ; et
- un circuit d'alimentation (302) dudit module (301),
dans lequel, quand ledit module (301) est dans un mode basse consommation, ledit circuit d'alimentation (302) est configuré pour être démarré périodiquement.

## Description

### Domaine technique

La présente description concerne de façon générale l'alimentation en énergie d'un dispositif électronique, et plus particulièrement d'un module de communication en champ proche (NFC, Near Field Communication) compris dans un dispositif électronique. La présente description se rapporte plus particulièrement à différents modes d'alimentation en énergie d'un module de communication en champ proche compris dans un dispositif électronique.

### Technique antérieure

De nos jours, la consommation en énergie des dispositifs électriques est un enjeu important dans l'industrie. Réduire la consommation en énergie d'un dispositif tout en assurant son bon fonctionnement et ses performances est l'un des principaux objectifs de la recherche et développement.

Il serait souhaitable de pouvoir améliorer, au moins en partie, certains aspects de l'alimentation en énergie d'un dispositif électronique comprenant un module de communication en champ proche.

### Résumé de l'invention

Il existe un besoin pour des dispositifs électroniques consommant moins d'énergie.

Il existe un besoin pour des modules de communication en champ proche consommant moins d'énergie.

Un mode de réalisation pallie tout ou partie des inconvénients des dispositifs électroniques connus.

Un mode de réalisation pallie tout ou partie des inconvénients des modules de communication en champ proche connus.

Un mode de réalisation prévoit un dispositif électronique comprenant :
- un module de communication en champ proche ; et
- un circuit d'alimentation dudit module,
dans lequel, quand ledit module est dans un mode basse consommation, ledit circuit d'alimentation est configuré pour être démarré périodiquement.

Un autre mode de réalisation prévoit un procédé d'alimentation dans un mode de basse consommation d'un module de communication en champ proche d'un dispositif électronique comprenant, en outre, un circuit d'alimentation dudit module,
dans lequel, quand ledit module est dans un mode basse consommation, ledit circuit d'alimentation est configuré pour être démarré périodiquement.

Selon un mode de réalisation, dans le mode basse consommation dudit module, ledit circuit d'alimentation est commandé par un circuit de commande adapté à démarrer périodiquement ledit circuit d'alimentation.

Selon un mode de réalisation, le circuit de commande comprend un compteur.

Selon un mode de réalisation, dans le mode basse consommation dudit module, le compteur est démarré, et lorsque la valeur du compteur atteint une valeur seuil, alors le circuit d'alimentation est démarré.

Selon un mode de réalisation, dans le mode basse consommation dudit module, lorsque la valeur du compteur atteint une valeur limite, supérieure à la valeur seuil, alors le circuit d'alimentation est arrêté et la valeur du compteur est remise à zéro.

Selon un mode de réalisation, ledit module de communication en champ proche comprend un détecteur de champ.

Selon un mode de réalisation, dans le mode basse consommation dudit module, quand le circuit d'alimentation est démarré, ledit module de communication en champ proche est alimenté et son détecteur de champ est démarré.

Selon un mode de réalisation, ledit module de communication en champ proche comprend, en outre, un circuit configuré pour comparer la fréquence d'un champ électrique détecté par ledit détecteur de champ à une fréquence de référence.

Selon un mode de réalisation, ledit circuit comparateur de fréquence est une machine d'état.

Selon un mode de réalisation, pendant le mode basse consommation, lorsque ledit circuit conclut que la fréquence du champ détecté par ledit détecteur de champ est égale à la fréquence de référence avec une marge d'erreur de l'ordre de 10 % alors un signal d'alerte est généré.

Selon un mode de réalisation, ledit dispositif comprend, en outre, un circuit d'alimentation d'un processeur adapté à recevoir ledit signal d'alerte.

Selon un mode de réalisation, ledit circuit d'alimentation comprend un régulateur de tension adapté à réguler une tension d'alimentation interne et à fournir une tension d'alimentation dudit module.

Selon un mode de réalisation, ledit circuit d'alimentation comprend, en outre, un circuit d'une tension de référence fournie par une bande de valence.

Selon un mode de réalisation, ledit circuit de commande comprend, en outre, un circuit d'une tension de référence fournie par une bande de valence.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un dispositif électronique auquel peuvent être appliqués les modes de réalisation décrits en relation avec les figures 3 à 5 ;
la figure 2 représente, très schématiquement et sous forme de blocs, deux schéma-blocs illustrant différents modes d'alimentation d'un dispositif électronique et d'un module de communication en champ proche ;
la figure 3 représente, très schématiquement et sous forme de blocs, un mode de réalisation d'une partie d'un mode de réalisation d'un dispositif électronique ;
la figure 4 représente, sous forme de blocs, un mode de réalisation plus détaillé d'une partie d'un mode de réalisation d'un dispositif électronique ; et
la figure 5 représente des groupes (C) et (D) de chronogrammes illustrant le fonctionnement du mode de réalisation de la figure 4.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, aucun protocole de communication en champ proche n'est pas décrit ici, les protocoles de communication en champ proche sont compatibles avec les modes de réalisation décrits ci-après.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

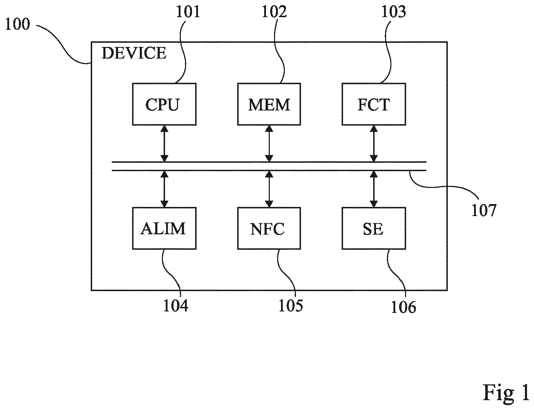

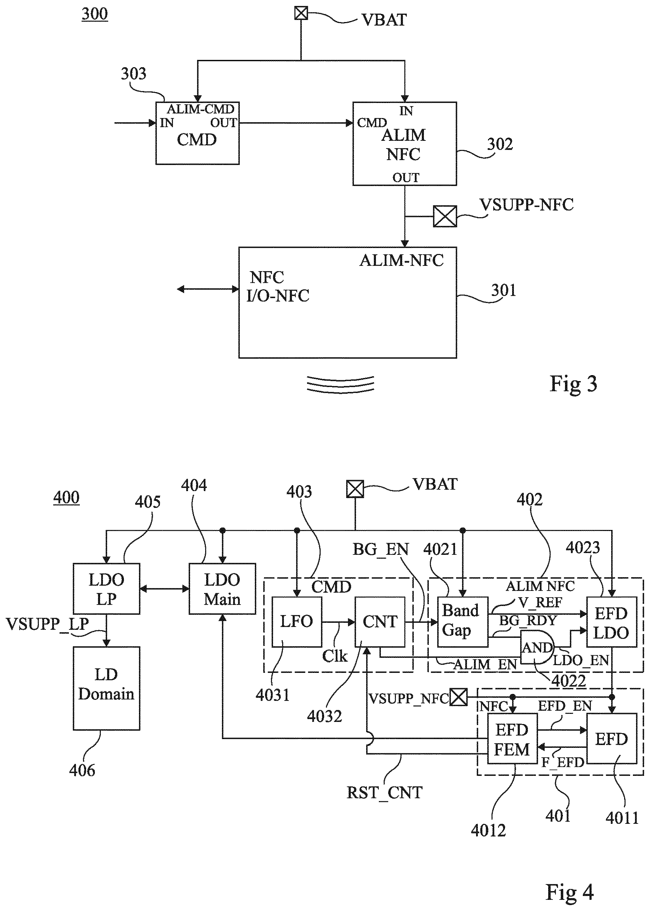

La figure 1 représente, très schématiquement et sous forme de blocs, un exemple d'un dispositif électronique 100 (DEVICE) auquel peuvent être appliqués les modes de réalisation décrits en relation avec les figures 3 à 5.

Le dispositif 100 est un dispositif électronique, comme un téléphone portable ou un appareil connecté, dont l'alimentation en énergie est fournie au moins partiellement de manière interne. Ainsi, le dispositif 100 comprend :
- un processeur 101 (CPU) ;
- une ou plusieurs mémoires 102 (MEM) ;
- un ou plusieurs circuits 103 (FCT) mettant en oeuvre différentes fonctionnalités du dispositif 100 ;
- des circuits d'alimentation 104 (ALIM) ;
- un module de communication en champ proche 105 (NFC), ou module NFC 105 ;
- de manière optionnelle, un élément sécurisé 106 (SE) ;
- un ou plusieurs bus informatiques 107 permettant aux différents circuits et composants d'échanger des données et/ou de l'énergie.

Le processeur 101 peut être le processeur principal en charge de mettre en oeuvre, par exemple, les fonctionnalités de base et/ou les fonctionnalités complexes du dispositif 100. Le dispositif 100 peut comprendre, par exemple, d'autres processeurs comme des processeurs secondaires liées à des tâches précises.

La ou les mémoires 102 sont des unités de stockage de données du dispositif 100. Les mémoires 102 peuvent être de différents types, comme des mémoires vives, des mémoires volatiles, des mémoires non volatiles, des mémoires mortes, etc.

Les circuits 103 peuvent comprendre un ou plusieurs circuits de mesure ou de traitement de données, un ou plusieurs dispositifs d'affichage, etc.

Les circuits d'alimentation 104 sont des circuits utilisés pour l'alimentation en énergie du dispositif 100 et de chacun de ses circuits et composants. Les circuits d'alimentation 104 peuvent comprendre des circuits d'alimentation dédiés à des circuits ou composants particuliers du dispositif 100. Selon un exemple, les circuits d'alimentation comprennent au moins un circuit d'alimentation du module NFC 105. Les circuits d'alimentation 104 peuvent comprendre, en outre, une source d'énergie interne comme une batterie ou une source de tension. Les circuits d'alimentation 104 peuvent comprendre, en outre, des moyens d'adaptation d'énergie provenant d'une source externe, par exemple du secteur.

Le module NFC 105 est un module de communication en champ proche (NFC, Near Field Communication) utilisant une technologie de communication sans fil à courte portée et à haute fréquence, permettant l'échange d'informations entre des périphériques jusqu'à une distance d'environ 10 cm.

L'élément sécurisé 106 est un dispositif électronique fiable permettant de traiter des données sensibles ou secrètes. L'élément sécurisé 106 peut être utilisé pour effectuer du chiffrement et/ou du déchiffrement de données, des opérations sur des données sensibles, et/ou pour stocker des données sensibles. L'élément sécurisé 106 est optionnel.

En figure 1, un seul bus 107 est représenté et relie tous les circuits et composants du dispositif 100 entre eux, mais plusieurs bus 107 reliant certains circuits et composants entre eux peuvent être envisagés.

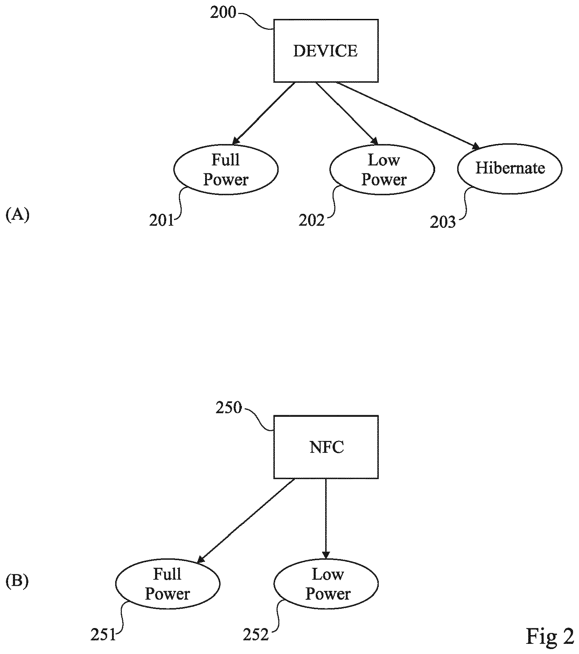

La figure 2 comprend deux schémas (A) et (B) illustrant chacun des exemples de différents modes d'alimentation possibles de dispositifs électroniques. Le schéma (A) illustre des exemples de différents modes d'alimentation possibles d'un dispositif électronique 200 (DEVICE) du type du dispositif 100 décrit en relation avec la figure 1. Le schéma (B) illustre des exemples de différents modes d'alimentation possibles d'un module de communication en champ proche 250 (NFC), ou module NFC 250, du type du module NFC 105 décrit en relation avec la figure 1, faisant partie du dispositif 200.

Le dispositif électronique 200 du schéma (A) comprend, par exemple, au moins trois modes d'alimentation différents pendant lequel le dispositif électronique 200 consomme plus ou moins d'énergie et/ou peut mettre en oeuvre plus ou moins de fonctionnalités. Le dispositif électronique 200 peut comprendre d'autres variantes de modes d'alimentation que les modes d'alimentation décrits ci-après. Les modes d'alimentation sont les suivants :
- le mode "pleine puissance" 201 (Full Power) ;
- le mode "basse consommation" 202 (Low Power) ; et
- le mode "d'hibernation" 203 (Hibernate).

Le mode "pleine puissance" 201 est le mode d'alimentation dans lequel le dispositif électronique 200 est susceptible de consommer le plus d'énergie. Toutes ses fonctionnalités peuvent être utilisées.

Le mode "basse consommation" 202, ou mode "basse puissance", est un mode d'alimentation dans lequel le dispositif électronique 200 réduit sa consommation en énergie. Pour cela, le dispositif électronique 200 peut empêcher la mise en oeuvre de certaines fonctionnalités, et/ou provoquer intentionnellement un ralentissement de la mise en oeuvre de certaines ou de toutes ses fonctionnalités, par exemple en ralentissant le fonctionnement de son ou ses processeurs.

Le mode "d'hibernation" 203 (Hibernate), ou mode de veille, est un mode d'alimentation dans lequel le dispositif électronique 200 réduit drastiquement sa consommation en énergie en n'autorisant la mise en oeuvre que de certaines fonctionnalités très spécifiques. Plus particulièrement, dans ce mode d'alimentation, la plupart des fonctionnalités du dispositif 200 sont désactivées et seules les fonctionnalités permettant de "réveiller" le dispositif 200 sont activées. On appelle ici des fonctionnalités permettant de "réveiller" le dispositif 200 les fonctionnalités adaptées à faire passer le dispositif 200 du mode "d'hibernation" vers un autre mode d'alimentation, le mode "pleine puissance" ou le mode "basse consommation" par exemple. Ces fonctionnalités sont, par exemple, la possibilité de sortir de ce mode en appuyant sur un bouton du dispositif 200, la détection d'une demande de communication, par exemple une demande de communication en champ proche ou une demande d'appel téléphonique si le dispositif 200 est un téléphone. Ainsi, le module NFC 250 fait généralement partie des circuits du dispositif 200 alimentés en énergie pendant un mode d'hibernation.

Le module NFC 250 du schéma (B) comprend, par exemple, au moins deux modes d'alimentation différents pendant lequel le module NFC 250 consomme plus ou moins d'énergie et/ou peut mettre en oeuvre plus ou moins de fonctionnalités. Le module NFC 250 peut comprendre d'autres modes d'alimentation que les modes d'alimentation décrits ci-après. Les modes d'alimentation sont les suivants :
- le mode "pleine puissance" 251 (Full Power) ; et
- le mode "basse consommation" 252 (Low Power).

Le mode "pleine puissance" 251 est le mode d'alimentation dans lequel le module NFC 250 est susceptible de consommer le plus d'énergie. Pendant ce mode, le module NFC 250 peut, par exemple, détecter la présence d'un champ périodiquement à une fréquence de l'ordre de 1 kHz, ou même peut détecter la présence d'un champ de manière continue.

Le mode "basse consommation" 252, ou mode "basse puissance", est un mode d'alimentation dans lequel le module NFC 250 réduit sa consommation en énergie. Pour cela, le module NFC 250 peut, par exemple, ralentir sa fréquence de détection d'un champ à une fréquence de l'ordre de 500 Hz. Les figures 3 à 5 présentent des modes de réalisation d'un circuit d'alimentation du module NFC, et plus particulièrement leur mise en oeuvre lors d'un mode "basse consommation".

Les différents modes d'alimentation du dispositif 200 et du module NFC 250 sont indépendants les uns des autres. Le dispositif 200 peut être dans le mode d'hibernation et le module NFC 250 peut être dans le mode pleine puissance, par exemple. Selon un autre exemple, si l'utilisateur du dispositif 200 décide de ne pas utiliser le module NFC il peut le mettre dans un mode "basse consommation".

La figure 3 représente, très schématiquement, et sous forme de blocs, une partie 300 d'un dispositif du type du dispositif 100 décrit en relation avec la figure 1 ou du type du dispositif 200 décrit en relation avec la figure 2.

La partie 300 comprend :
- un module de communication en champ proche 301 (NFC), ou module NFC 301 ;
- un circuit d'alimentation 302 (ALIM NFC) associé au module NFC 301 ; et
- un circuit de commande 303 (CMD).

Le module NFC 301 est du type du module NFC 105 décrit en relation avec la figure 1 ou du module NFC 250 décrit en relation avec la figure 2. Le module NFC 301 est adapté à émettre et à recevoir un champ électrique pour mettre en oeuvre une communication en champ proche. Le module NFC comprend, au moins, une borne d'alimentation ALIM-NFC et une borne de communication interne I/O-NFC. La borne d'alimentation ALIM-NFC est reliée, de préférence connectée, au circuit d'alimentation 302. La borne de communication interne I/O-NFC permet au module NFC d'échanger des données et des instructions avec le reste du dispositif électronique, comme, par exemple, un signal d'alerte ou d'information de la détection d'un champ pouvant mener à une communication NFC. Comme décrit précédemment, le module NFC 301 comprend plusieurs modes d'alimentation différents, par exemple, au moins un mode d'alimentation "pleine puissance" et au moins un mode d'alimentation "basse consommation". Pendant le mode "basse consommation", le module NFC 301 réduit la fréquence à laquelle il essaye de détecter un champ électromagnétique.

Le circuit d'alimentation 302 est un circuit adapté à gérer l'alimentation en énergie du module NFC 301. Pour cela, le circuit 302 comprend, au moins, une borne d'entrée IN recevant une tension d'alimentation VBAT, une borne de sortie OUT fournissant une tension d'alimentation VSUPP-NFC destinée à alimenter le module NFC 301, et une borne de commande CMD. La tension d'alimentation VBAT est fournie au circuit 302, par exemple, par une source d'énergie interne du dispositif électronique comme une batterie, ou par un circuit de conversion d'une source d'énergie externe au dispositif à laquelle il est relié. La borne de commande CMD permet d'allumer ou d'éteindre le circuit d'alimentation 302. Un mode de réalisation plus détaillé du circuit d'alimentation 302 est décrit en relation avec la figure 4.

Le circuit de commande 303 est un circuit adapté à commander le circuit d'alimentation 302, et plus précisément à commander le circuit d'alimentation 302 lorsque le module NFC 301 est dans un mode "basse consommation". Le compteur 303 comprend une borne d'alimentation ALIM-CMD recevant la tension VBAT, une borne d'entrée IN recevant des données de programmation, et une borne de sortie OUT. La borne d'entrée IN reçoit des données informant le circuit de commande 303 des modes d'alimentation du module NFC 301 et, par exemple, du dispositif. Selon un exemple, la borne d'entrée IN reçoit ces données directement de la part du module NFC 301. La borne de sortie OUT fournit une tension de commande à la borne de commande CMD du circuit d'alimentation 302. Un mode de réalisation plus détaillé du compteur 303 est décrit en relation avec la figure 4.

Le fonctionnement de la partie 300 est le suivant.

Pendant un mode "pleine puissance" du module NFC 301, le circuit d'alimentation 302 est toujours démarré, activé, et alimente le module NFC 301.

Pendant un mode "basse consommation" du module NFC 301, et selon un mode de réalisation, le circuit de commande 303 active périodiquement le circuit d'alimentation 302 de façon à ce que le circuit d'alimentation 302 ne consomme de l'énergie qu'aux moments où le module NFC 301 en a besoin. Plus précisément, le module NFC 301 ne mettant en oeuvre une recherche de champ que périodiquement pendant le mode "basse consommation", le circuit d'alimentation 302 est activé périodiquement par le circuit de commande 301 pour n'alimenter le module NFC 301 qu'au moment où il essaye de détecter un champ. Si le module NFC 301 détecte un champ, le circuit d'alimentation 302 peut rester activé jusqu'à ce que le module NFC 301 ait terminé les actions qu'il a à faire, des exemples d'actions à faire sont décrites en relation avec la figure 4. Si le module NFC 301 ne détecte pas de champ alors le circuit d'alimentation 302 est éteint.

Un avantage de ce mode de réalisation est qu'il permet de limiter la consommation en énergie du dispositif électronique lors de la mise en oeuvre du mode "basse consommation du module NFC".

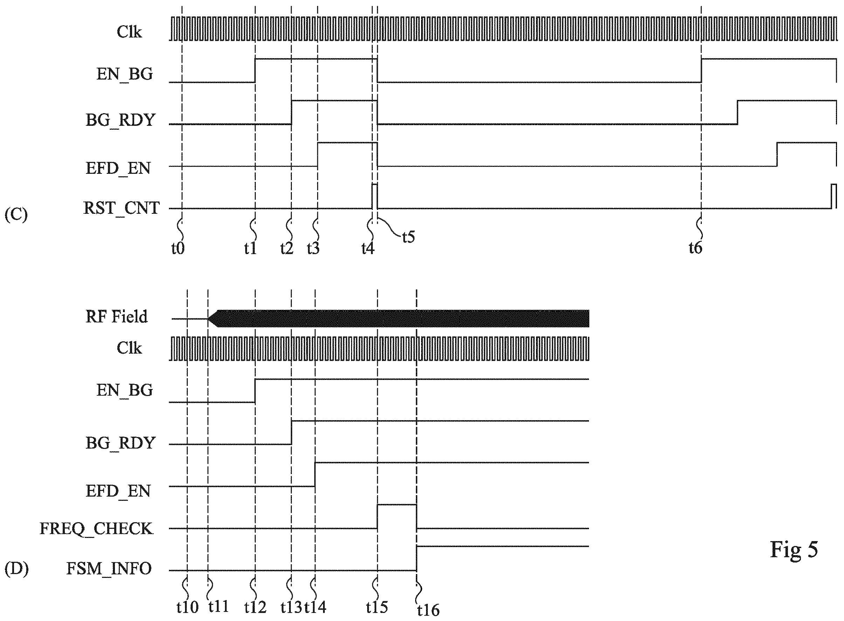

La figure 4 représente, très schématiquement, et sous forme de blocs, une partie 400 d'un dispositif du type de la partie 300 de dispositif décrit en relation avec la figure 3. La partie 400 est un exemple pratique plus détaillé que la partie 300 décrite précédemment. Le fonctionnement de la partie 400 lors d'un mode "basse consommation" du module NFC est décrite en relation avec les chronogrammes de la figure 5.

La partie 400 comprend :
- un module de communication en champ proche 401 (NFC), ou module NFC 401, représenté en pointillé en figure 4 ;
- un circuit d'alimentation 402 (ALIM NFC) associé au module NFC 401, représenté en pointillé en figure 4 ;
- un circuit de commande 403 (CMD), représenté en pointillé en figure 4 ;
- un régulateur de tension principal 404 (LDO Main) ;
- un régulateur de tension secondaire 405 (LDO LP) ; et
- un ensemble de circuits "basse consommation" 406 (LP Domain) .

Le module NFC 401 est représenté partiellement en figure 4, et comprend au moins un détecteur de champ 4011 (EFD) et une machine d'état 4012 (EFD FSM). Le détecteur de champ 4011 et la machine d'état 4012 sont tous les deux alimentés en énergie par une tension VSUPP_NFC fournie par le circuit d'alimentation 402.

Le détecteur de champ 4011 est un circuit adapté à détecter un champ, et à, en particulier, repérer la fréquence d'un champ qu'il détecte. Le détecteur de champ 4011 a d'autres fonctionnalités usuelles pour la personne du métier et qui ne sont pas décrites ici. Le détecteur de champ 4011 comprend une borne d'alimentation recevant la tension VSUPP_NFC, une borne d'activation recevant un signal d'activation EFD_EN et une borne de sortie de fréquence fournissant un signal F_EFD représentatif de la fréquence d'un champ détecté par le détecteur de champ 4011. Par exemple, le signal F_EFD est un signal d'horloge dont la fréquence est égale à la fréquence du champ détecté par le détecteur de champ 4011. Autrement dit, le détecteur de champ 4011 extrait la fréquence du champ qu'il détecte et la fournit sous forme d'un signal d'horloge.

La machine d'état 4012 est un circuit adapté à :
- activer le détecteur de champ 4011 ;
- vérifier si le détecteur de champ 4011 détecte un champ susceptible de véhiculer une communication en champ proche; et
- informer le dispositif qu'une communication en champ proche est détectée.

Pour cela, la machine d'état 4012 comprend :
- une borne d'alimentation recevant la tension VSUPP_NFC ;
- une borne fournissant le signal d'activation EFD_EN au détecteur de champ 4011 ;
- une borne recevant le signal F_EFD ;
- une borne fournissant un signal d'alerte FSM_INFO, ou signal d'information FSM_INFO au dispositif ; et
- une borne fournissant un signal de réinitialisation CNT_RST d'un compteur à destination du circuit de commande 403.

Le circuit d'alimentation 402 (ALIM NFC) associé au module NFC 401 comprend, au moins :
- un circuit de tension de référence fournie par une bande valence 4021 (Band Gap), ou circuit de tension de référence 4021 ;
- une porte logique 4022 de type "ET" (AND) ; et
- un régulateur de tension 4023 (EFD LDO) secondaire.

Le circuit de tension de référence 4021 est alimenté par une tension d'alimentation VBAT interne, fournit une tension de référence V-REF, et est adapté à fournir un signal d'état BG_RDY. Le circuit de tension de référence 4021 reçoit, en outre, un signal d'activation BG_EN. La tension d'alimentation VBAT est fournie au circuit 402, par exemple, par une source d'énergie interne du dispositif électronique comme une batterie, ou par un circuit de conversion d'une source d'énergie externe au dispositif à laquelle il est relié.

La porte logique 4022 est une porte de type "ET" comprenant deux entrées, une première entrée recevant le signal d'état BG_RDY du circuit de tension de référence 4021, et une deuxième entrée recevant un signal d'activation ALIM_EN de la part du circuit de commande 403. La porte logique 4022 fournit en sortie un signal d'activation LDO_EN du régulateur de tension 4023.

Le régulateur de tension 4023 est un régulateur de tension permettant, lorsqu'il est activé, de fournir la tension d'alimentation VSUPP_NFC au module NFC 401 à partir de la tension VBAT. Pour cela, le régulateur de tension 4023 reçoit la tension VBAT, la tension de référence V_REF et le signal d'activation LDO_EN pour fournir en sortie la tension d'alimentation VSUPP_NFC.

Le circuit de commande 403 (CMD) associé au circuit d'alimentation 402 comprend, par exemple, un oscillateur à basse fréquence 4031 (LFO) et un compteur 4032 (CNT). Lorsque le module NFC 401 est dans un mode "pleine puissance", le circuit de commande 403 est adapté à activer de façon permanente le circuit d'alimentation 402. Lorsque le module NFC 401 est dans un mode "basse consommation", le circuit de commande 403 est adapté à activer de façon périodique le circuit d'alimentation 402.

L'oscillateur à basse fréquence 4031 est un oscillateur fournissant un signal d'horloge Clk à fréquence constante. Selon un exemple, le signal d'horloge a une fréquence comprise entre 60 et 70 kHz, par exemple de l'ordre de 64 kHz. Pour cela, l'oscillateur à basse fréquence 4031 est alimenté par la tension d'alimentation VBAT.

Le compteur 4032 est un circuit configuré pour démarrer périodiquement le circuit d'alimentation 402. Pour cela, le compteur 4032 reçoit le signal d'horloge Clk, le signal de réinitialisation RST_CNT, et fournit, en sortie, le signal d'activation BG_EN et le signal d'activation ALIM_EN. La valeur du compteur 4032 est, par exemple, incrémenté à chaque nouveau front montant, ou descendant, du signal d'horloge Clk. Le fonctionnement plus détaillé du compteur 4032, et plus généralement du circuit de commande 403 est décrit plus en détail en relation avec la figure 5.

Le régulateur de tension principal 404 (LDO Main) est un régulateur de tension adapté à fournir une tension d'alimentation formant l'alimentation principale du dispositif. Selon un exemple, le régulateur 404 fournit une tension d'alimentation permettant d'alimenter le processeur principal du dispositif, et un signal d'information LDO_INFO à destination du régulateur de tension secondaire 405. Le régulateur reçoit la tension VBAT et la tension d'information FSM_INFO.

Le régulateur de tension secondaire 405 (LDO LP) est un régulateur de tension adapté à fournir une tension d'alimentation formant une alimentation secondaire du dispositif. Selon l'exemple de la figure 4, le régulateur 405 fournit une tension d'alimentation permettant d'alimenter l'ensemble des circuits "basse consommation" du dispositif avec une tension VSUPP-LP. Le régulateur 405 reçoit la tension VBAT et le signal d'information LDO_INFO. Le signal d'information LDO_INFO peut, par exemple, permettre au régulateur 404 d'indiquer son état de fonctionnement au régulateur 405.

L'ensemble de circuits "basse consommation" 406 (LP Domain) est l'ensemble des circuits et composants du dispositif qui sont alimentés lorsque le dispositif est dans un mode "basse consommation". Selon un exemple, lorsque le dispositif est dans un mode "pleine puissance" les régulateurs 404 et 405 sont tous les deux activés, mais lorsque le dispositif est dans un mode "basse consommation", le régulateur 404 est désactivé et le régulateur 405 est activé.

Selon une variante de réalisation, le circuit de tension de référence 4021 peut faire partie du circuit de commande 403 plutôt que du circuit d'alimentation 402.

La figure 5 représente deux groupes (C) et (D) de chronogrammes illustrant le fonctionnement de la partie 400 du dispositif décrit en relation avec la figure 4 lorsque le module NFC 401 est dans un mode "basse consommation". Le groupe (C) illustre le fonctionnement de la partie 400 lorsque le module NFC 401 est dans un mode "basse consommation" et qu'aucun champ n'est détecté par le détecteur de champ 4011. Le groupe (C) illustre le fonctionnement de la partie 400 lorsque le module NFC 401 est dans un mode "basse consommation" et qu'un champ est détecté par le détecteur de champ 4011.

Le groupe (C) comprend les chronogrammes des signaux suivants :
- le signal d'horloge Clk ;
- le signal d'activation EN_BG du circuit de tension de référence 4021 ;
- le signal d'état BG_RDY du circuit de tension de référence 4021 ;
- le signal d'activation EFD_EN du détecteur de champ 4011 ; et
- le signal de réinitialisation RST_CNT du compteur 4032.

A un instant initial t0, tous les signaux du groupe (C) sont à un état bas, par exemple un niveau de tension égal à une tension de référence, par exemple la tension V_REF ou une autre tension. Le signal d'horloge Clk présente, quant à lui, des fronts montants et descendants réguliers.

A un instant t1, postérieur à l'instant t0, le signal d'activation EN_BG passe de l'état bas à un état haut, par exemple un niveau de tension supérieure au niveau de tension de référence. Autrement dit, le compteur 4032 lance le démarrage du circuit de tension de référence 4021. Selon un exemple, le compteur 4032 lance le démarrage du circuit de tension de référence parce que sa valeur a atteint une valeur seuil. En parallèle, le compteur 4032 indique au circuit d'alimentation 402 qu'il lui demande son démarrage, par exemple, via le signal d'activation ALIM_EN qui passe lui aussi d'un état bas à un état haut.

A un instant t2, postérieur à l'instant t1, le signal d'état BG_RDY passe de l'état bas à l'état haut. Le circuit de tension de référence 4021 indique ainsi que sa phase de démarrage est terminée et qu'il est prêt à être utilisé.

En passant à un état haut, le signal BG_RDY permet le démarrage du régulateur de tension 4023 via le signal d'activation LDO_EN.

A un instant t3, postérieur à l'instant t2, le signal d'activation EFD_EN du détecteur de champ 4011 passe d'un état bas à l'état haut, et rend alors le détecteur de champ 4011 actif. Le détecteur de champ 4011 recherche activement un champ.

A un instant t4, postérieur à l'instant t3, la valeur du compteur 4011 arrive à une valeur limite, supérieure à la valeur seuil, et son signal de réinitialisation présente une impulsion. La valeur du compteur 4011 est alors mise à zéro.

Si la valeur du compteur 4011 a atteint une valeur limite, cela signifie que pendant le laps de temps où il était actif, c'est-à-dire entre les instants t3 et t4, le détecteur de champ 4011 n'a pas détecté de champ susceptible de mener à une communication NFC.

A un instant t5, postérieur à l'instant t4, les signaux EN_BG, BG_RDY et EFD_EN passent à l'état bas, suite au pic présent sur le signal RST_CNT. Le circuit de tension de référence, le régulateur de tension 4023 et le module NFC 402 ne sont plus alimentés et/ou activés.

A un instant t6, postérieur à l'instant t5, une nouvelle phase de démarrage du détecteur de champ commence, et comme à l'instant t1, le signal EN_BG passe de l'état bas à l'état haut.

L'avantage de ce mode de réalisation, est que lorsque le détecteur de champ n'est pas activé, le circuit d'alimentation 402 ne consomme pas d'énergie puisqu'il n'est lui-même pas activé.

Le groupe (D) comprend les chronogrammes des signaux suivants :
- l'état d'un champ RF Field détectable par le détecteur de champ 4011 et susceptible de mener à une communication NFC ;
- le signal d'horloge Clk ;
- le signal d'activation EN_BG du circuit de tension de référence 4021 ;
- le signal d'état BG_RDY du circuit de tension de référence 4021 ;
- le signal d'activation EFD_EN du détecteur de champ 4011 ;
- un signal interne FREQ_CHECK de la machine d'état 4012 ; et
- le signal d'information FSM_INFO de la machine d'état 4012.

A un instant initial t10, tous les signaux du groupe (D) sont à un état bas, par exemple un niveau de tension égal à une tension de référence, par exemple la tension V_REF ou une autre tension. Le signal d'horloge Clk présente, quant à lui, des fronts montants et descendants réguliers. De plus, aucun champ RF Field n'est détectable par le détecteur de champ 4011.

A un instant t11, postérieur à l'instant t10, le champ RF Field susceptible de mener à une communication en champ proche est à proximité du dispositif, et peut être détecté par le détecteur de champ 4011.

A un instant t12, postérieur à l'instant t11, et comme à l'instant t1 décrit précédemment, le signal d'activation EN_BG passe de l'état bas à l'état haut. Autrement dit, le compteur 4032 lance le démarrage du circuit de tension de référence 4021. En parallèle, le compteur 4032 indique au circuit d'alimentation 402 qu'il lui demande son démarrage, par exemple, via le signal d'activation ALIM_EN qui passe lui aussi d'un état bas à un état haut.

A un instant t13, postérieur à l'instant t12, le signal d'état BG_RDY passe de l'état bas à l'état haut. Le circuit de tension de référence 4021 indique ainsi que sa phase de démarrage est terminée et qu'il est prêt à être utilisé.

En passant à un état haut, le signal BG_RDY permet le démarrage du régulateur de tension 4023 via le signal d'activation LDO_EN.

A un instant t14, postérieur à l'instant t13, le signal d'activation EFD_EN du détecteur de champ 4011 passe d'un état bas à l'état haut, et rend alors le détecteur de champ 4011 actif. Le détecteur de champ 4011 recherche activement un champ.

Comme le champ RF Field est susceptible d'être détecté par le détecteur de champ 4011, celui-ci le détecte, et détermine la fréquence du champ RF Field. Comme décrit précédemment, et pour cela, le détecteur de champ 4011 extrait la fréquence du champ RF Field et fournit le signal d'horloge F_EFD dont la fréquence est égale à la fréquence du champ RF Field. Ensuite, la fréquence est évaluée, par la machine d'état 4012, en comparant la fréquence du signal F_EFD à un signal d'horloge de référence, par exemple, le signal Clk. Le signal d'horloge de référence a, par exemple, une fréquence de l'ordre de 64kHz.

Pour effectuer cette comparaison, la machine d'état 4012 peut, par exemple, compter le nombre de périodes que présente le signal F_EFD pendant une période du signal d'horloge de référence. Selon un exemple, si le signal d'horloge de référence est le signal d'horloge Clk et qu'il a une fréquence de l'ordre de 64 kHz, alors la machine d'état vérifie que le signal F_EFD présente entre 192 et 235 périodes pendant une période du signal Clk. De cette façon, la machine d'état vérifie si la fréquence du champ est assez proche de la fréquence de référence, généralement 13,56 MHz, avec une marge d'erreur de l'ordre de 10 %.

A un instant t15, postérieur à l'instant t14, le signal interne FREQ_CHECK de la machine d'état 4012 passe de l'état bas à l'état haut et indique ainsi que la fréquence reçue, via le signal F_EFD, de la part du détecteur de champ 4011 est assez proche de la fréquence de référence, c'est-à-dire de l'ordre de la fréquence de référence avec une marge d'erreur de l'ordre de 10 %. Autrement dit, la machine d'état confirme le fait que le champ RF Field est susceptible de mener à une communication en champ proche.

A un instant t16, postérieur à l'instant t15, le signal d'information FSM_INFO passe d'un état bas à un état haut. Selon un exemple, le signal d'information FSM_INFO peut permettre de démarrer un circuit d'alimentation principal, comme le régulateur 404, du dispositif. Le signal d'information FSM_INFO peut, selon un autre exemple, indiquer ainsi que le dispositif doit se tenir prêt à une communication NFC, et qu'il doit passer dans un mode de consommation d'énergie adapté, comme un mode "pleine puissance" ou "basse consommation" si le dispositif est dans un mode "hibernation".

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Dispositif électronique (100 ; 300 ; 400) comprenant :
- un module de communication en champ proche (105 ; 301 ; 401) ; et
- un circuit d'alimentation (104 ; 302 ; 402) dudit module (105 ; 301 ; 401),
dans lequel, quand ledit module (105 ; 301 ; 401) est dans un mode basse consommation, ledit circuit d'alimentation (104 ; 302 ; 402) est configuré pour être démarré périodiquement.

2. Procédé d'alimentation dans un mode de basse consommation d'un module de communication en champ proche (105 ; 301 ; 401) d'un dispositif électronique (100 ; 300 ; 400) comprenant, en outre, un circuit d'alimentation (104 ; 302 ; 402) dudit module,
dans lequel, quand ledit module (105 ; 301 ; 401) est dans un mode basse consommation, ledit circuit d'alimentation (104 ; 302 ; 402) est configuré pour être démarré périodiquement.

3. Dispositif selon la revendication 1 ou procédé selon la revendication 2, dans lequel, dans le mode basse consommation dudit module, ledit circuit d'alimentation (302 ; 402) est commandé par un circuit de commande (303 ; 403) adapté à démarrer périodiquement ledit circuit d'alimentation (302 ; 402).

4. Dispositif ou procédé selon la revendication 3, dans lequel le circuit de commande (303 ; 403) comprend un compteur.

5. Dispositif ou procédé selon la revendication 4, dans lequel, dans le mode basse consommation dudit module, le compteur est démarré, et lorsque la valeur du compteur atteint une valeur seuil, alors le circuit d'alimentation est démarré.

6. Dispositif ou procédé selon la revendication 5, dans lequel, dans le mode basse consommation dudit module, lorsque la valeur du compteur atteint une valeur limite, supérieure à la valeur seuil, alors le circuit d'alimentation est arrêté et la valeur du compteur est remise à zéro.

7. Dispositif selon l'une quelconque des revendications 1, 3 à 6, ou procédé selon l'une quelconque des revendications 2 à 6, dans lequel, ledit module de communication en champ proche (401) comprend un détecteur de champ (4011).

8. Dispositif ou procédé selon la revendication 7, dans lequel, dans le mode basse consommation dudit module, quand le circuit d'alimentation (402) est démarré, ledit module de communication en champ proche (401) est alimenté et son détecteur de champ (4011) est démarré.

9. Dispositif ou procédé selon la revendication 7 ou 8, dans lequel ledit module de communication en champ proche (401) comprend, en outre, un circuit (4012) configuré pour comparer la fréquence d'un champ électrique détecté par ledit détecteur de champ (4011) à une fréquence de référence.

10. Dispositif ou procédé selon la revendication 9, dans lequel ledit circuit comparateur de fréquence est une machine d'état (4012).

11. Dispositif ou procédé selon la revendication 9 ou 10, dans lequel, pendant le mode basse consommation, lorsque ledit circuit (4012) conclut que la fréquence du champ détecté par ledit détecteur de champ (4011) est égale à la fréquence de référence avec une marge d'erreur de l'ordre de 10 % alors un signal d'alerte (FSM_INFO) est généré.

12. Dispositif selon l'une quelconque des revendications 1, 3 à 11, ou procédé selon l'une quelconque des revendications 2 à 11, dans lequel ledit dispositif comprend, en outre, un circuit d'alimentation d'un processeur adapté à recevoir ledit signal d'alerte (FSM_INFO).

13. Dispositif selon l'une quelconque des revendications 1, 3 à 12, ou procédé selon l'une quelconque des revendications 2 à 12, dans lequel ledit circuit d'alimentation (402) comprend un régulateur de tension (4023) adapté à réguler une tension d'alimentation interne (VBAT) et à fournir une tension d'alimentation (VSUPP_NFC) dudit module (401).

14. Dispositif selon l'une quelconque des revendications 1, 3 à 13, ou procédé selon l'une quelconque des revendications 2 à 13, dans lequel ledit circuit d'alimentation (402) comprend, en outre, un circuit d'une tension de référence fournie par une bande de valence (4021).

15. Dispositif selon l'une quelconque des revendications 1, 3 à 13, ou procédé selon l'une quelconque des revendications 2 à 13, dans lequel ledit circuit de commande (403) comprend, en outre, un circuit d'une tension de référence fournie par une bande de valence (4021).
